# EUROPÄISCHE PATENTSCHRIFT

(11) **EP 1 355 967 B1**
(45) Veröffentlichungstag und Bekanntmachung des Hinweises auf die Patenterteilung: **02.12.2009**
(21) Anmeldenummer: 01989559.8
(22) Anmeldetag: 03.12.2001
(51) Int. Cl.: C08G 18/09, C08G 18/16, C08G 18/78, C08G 18/79, C08G 18/80

(54) **BLOCKIERTE POLYISOCYANATE AUF HDI-BASIS**
BLOCKED HDI-BASED POLYISOCYANATES
POLYISOCYANATES BLOQUES A BASE D'HDI

(30) Priorität: 14.12.2000 DE 10062411
(43) Veröffentlichungstag der Anmeldung: 29.10.2003
(73) Patentinhaber: Bayer MaterialScience AG, 51368 Leverkusen (DE)
(72) Erfinder: RICHTER, Frank, 51373 Leverkusen (DE); BAUMBACH, Beate, 51399 Burscheid (DE); FÜSSEL, Christian, 47918 Tönisvorst (DE)
(86) Internationale Anmeldenummer: PCT/EP2001/014092
(87) Internationale Veröffentlichungsnummer: WO 2002/048230

(56) Entgegenhaltungen:
- DE-A- 19 824 490
- DE-A- 19 853 569
- US-A- 5 144 031
- US-A- 5 961 878

## Beschreibung

Die Erfindung betrifft neue blockierte Isocyanate auf Basis von HDI, deren Herstellung und Verwendung.

Die Herstellung und Verwendung blockierter Polyisocyanate (b1. PIC) ist seit langem bekannt. Hierbei werden die freien NCO-Gruppen von Polyisocyanaten (vorübergehend) desaktiviert, um zu Produkten zu gelangen, die vorzugsweise in einkomponentig zu verarbeitenden Formulierungen eingesetzt werden können (vgl. D. A. Wicks und Z. W. Wicks Jr., Progr. Org. Coatings, vol 36, 1999, S. 148 ff und darin zitierte Literatur). Breit eingeführt sind beispielsweise b1. PIC-Härter, denen Polyisocyanate auf Basis oligomerer HDI-Derivate, beispielsweise vom Trimertyp (Isocyanurate), zu Grunde liegen.

Alkohole haben sich in zahlreichen Anwendungen als Blockierungsmittel bewährt (vgl. auch Y. Huang, G. Chu, M. Nieh und F. N. Jones, J. Coat. Tech., vol 67, 1995, S. 33-40 und darin zitierte Literatur). Produkte auf Basis von HDI-Derivaten werden in der vorstehend zitierten Literaturstelle allerdings nur am Rande behandelt (vgl. loc cit, S. 37, Zeile 1, es handelt sich hier um ein mit Methanol blockiertes Desmodur^{®} N 3300 der Fa. Mobay). Häufiger zitiert wird die Verwendung spezieller, hochsiedender Alkohole wie 1- und 2-Octanol (I. de Aguirree and J. Collot, Bull. Soc. Chim. Belg., vol 98, 1989, 19), Furfurylalkohol (EP-A 206 071), Benzylalkohol (H. Ulrich and D. Gilmore, Urethane Chem. Appl., ACS Symp. Series # 172, ACS, Washington D.C., 1981, S. 519) sowie Cyclohexanol (EP-A 21 014).

Von Nachteil ist in diesem Zusammenhang, dass die Blockierung von o.g. HDI-Trimeren vom Isocyanurattyp mit einfachen Alkoholen wie Methanol, Ethanol, n-sowie iso-Propanol etc. zu Produkten führt, die bei Zimmertemperatur (22 ± 2°C) eine unbefriedigende Kristallisationsbeständigkeit in üblichen Lacklösemitteln wie n-Butylacetat (BuAc), 2-Methoxypropylacetat (MPA), Xylol (X), Solventnaphtha (SN 100) etc. aufweisen. Man beobachtet nach der Herstellung des blockierten Polyisocyanathärters, mitunter zeitlich etwas verzögert, ein Eindicken der Lösung, die nach wenigen Tagen in der völligen Erstarrung bzw. in einem teilweisen Gelieren der vorher klaren, flüssigen Mischung resultiert. Die Kristallisationsneigung Alkoholblockierter HDI-Trimerer vom Isocyanurattyp verstärkt sich einerseits bei hohen Konzentrationen der Alkohol-bl. PIC in o.g. Lacklösemitteln und andererseits dann, wenn HDI-PIC vom Isocyanurattyp verwendet werden, die hohe Anteile der "Idealstruktur" des HDI-Trimeren, 2,4,6-Tris(6-isocyanatohexyl)-2,4,6-triazin-1,3,5-trion, enthalten. Dieser Umstand deutet darauf hin, dass die Umsetzungsprodukte von 2,4,6-Tris(6-isocyanatohexyl)-2,4,6-triazin-1,3,5-trion mit drei Äquivalenten Alkohol die stärkste Krisallisationsneigung aufweisen, während eine zunehmende "Verunreinigung" letzterer mit Alkohol-blockierten, höhermolekularen Isocyanurat-Polyisocyanaten (Pentamere, Heptamere etc.) sich bezüglich der Kristallisationsneigung der gesamten Mischung eher positiv auswirkt. Derartige Effekte trifft man häufig in der organischen Chemie an. Allerdings ist es unmöglich vorherzusagen, bis zu welchem Gehalt man die zur Kristallisation neigenden Bestandteile abreichern muss, um zu kristallisationsstabilen Produkten zu gelangen.

Aufgabe der vorliegenden Erfindung war es daher, mit einfachen Alkoholen blockierte HDI-PIC zur Verfügung zu stellen, die gegenüber den bekannten, mit einfachen Alkoholen blockierten HDI-PIC vom Isocyanurattyp eine signifikant verbesserte Kristallisationsbeständigkeit aufweisen sollten, wobei die anderen, vorteilhaften technologischen Eigenschaften der blockierten HDI-PIC vom Isocyanurattyp gewahrt oder sogar noch verbessert werden sollten.

Diese Aufgabe konnte überraschenderweise durch die Verwendung von anteilig Iminooxadiazindiongruppen (asymmetrische Trimere, AST) enthaltenden HDI-PIC gelöst werden (HDI-AST-PIC).

Gegenstand der Erfindung sind mit Alkoholen, blockierte Polyisocyanate auf HDI-Basis, erhältlich durch Umsetzung von Iminooxadiazindiongruppen enthaltenden HDI-PIC Basisharzen, bei denen sich der molare Anteil an Iminooxadiazindiongruppen an der Summe aus Iminooxadiazindion- und Isocyanuratgruppen auf mindestens 20 Mol-%, bevorzugt mindestens 30 Mol-%, beläuft, mit Alkoholen der Formel (I)

ROH (I),

worin
- R: für aliphatische, geradkettige oder verzweigte, gegebenenfalls cyclische, gegebenenfalls substituierte (O-R¹, NR¹₂), C₁-C₆-Reste, bevorzugt C₁-C₄-Reste steht und
- R¹: für geradkettig oder verzweigtes C₁₋C₄-Alkyl steht.

Ein weiterer Gegenstand der Erfindung ist ein Verfahren zur Herstellung der mit Alkoholen blockierten Polyisocyanate auf HDI-Basis, dadurch gekennzeichnet, dass Iminooxadiazindiongruppen enthaltende HDI-PIC Basisharze, bei denen der molare Anteil an Iminooxadiazindiongruppen an der Summe aus Iminooxadiazindion- und Isocyanuratgruppen mindestens 20 Gew.-%, bevorzugt mindestens 30 Gew.-% beträgt, mit Alkoholen der Formel (I)

ROH (I),

in welcher
- R: für aliphatische, geradkettige oder verzweigte, gegebenenfalls cyclische, gegebenenfalls substituierte (O-R¹ NR¹₂), C₁-C₆-Reste, bevorzugt C₁-C₄-Reste steht und
- R¹: für geradkettig oder verzweigtes Alkyl steht,
umgesetzt werden.

Gegenstand der Erfindung ist weiterhin die Verwendung der erfindungsgemäß erhältlichen blockierten Iminooxadiazindiongruppen enthaltenden HDI-Polyisocyanate zur Herstellung von Polyurethan-Kunststoffen und -Beschichtungen, bevorzugt zur Beschichtung von Substraten.

Die Herstellung von HDI-AST-PIC ist beispielsweise in der EP-A 798 299 beschrieben. Aus der DE -A-198 53 569 sind Urethanacrylate aus Iminooxadiazindiongruppen enthaltenden HDI-Polyisocyanaten und Hydroxyalkylacrylaten die geringe Neigung zur Kristallisation aufweisen, bekannt.

Die Verwendung von HDI-AST-PIC zur Herstellung blockierter Polyisocyanate ist erstmals in der EP-A 947 531, S. 3, Z. 23-25 zitiert. Gegenstand der EP-A 947 531 sind allerdings mit Malonester blockierte PIC, die mit Formaldehyd gegen Thermovergilbung stabilisiert sind. Alkohol-blockierte PIC werden in der EP-A 947 531 nicht behandelt. Darüber hinaus sind PIC, die ausschließlich auf HDI basieren, als Ausgangskomponente für die Herstellung der in der EP-A 947 531 beanspruchten bl. PIC, wie in *loc. zit.* S. 3, Z. 26-28, explizit erwähnt wird, nicht bevorzugt.

In den Vorveröffentlichungen des Standes der Technik fehlt jeglicher Hinweis darauf, dass die Kombination "Alkohol + HDI-AST-PIC" zu Produkten mit vorteilhaften Eigenschaften führen könnte. Generell kann der Fachmann aus den Vorveröffentlichungen des Standes der Technik nicht entnehmen, dass sich die Kristallisationsbeständigkeit von bl. HDI-AST-PIC in irgend einer Weise von der ihrer rein Isocyanurat- (symmetrischer Trimerer) basierenden Pendants unterscheidet. Lediglich die allgemein niedrigere Viskosität der AST-PIC im Vergleich zu ihren symmetrischen Pendants ist literaturbekannt (Proc. XXIV. Fatipec-Conference, 8.-11. June 1998, Interlaken, Switzerland, vol. D, pp. 131-145). Ein Zusammenhang "niedrigere Viskosität des nicht blockierten Härters - bessere Kristallisationsstabilität der b1-Form" besteht nicht. Zwar ist allgemein bekannt, dass bei zunehmender "Verunreinigung" organischer Substanzen in der Regel eine Schmelzpunkterniedrigung eintritt, ob und wie lange derartige Mischungen allerdings kristallisationsstabil sind, ist völlig ungewiss und bedarf im Einzelfall immer der experimentellen Überprüfung.

Die erfindungsgemäßen bl. HDI-AST-PIC lassen sich in technisch einfacher Weise durch Reaktion der beispielsweise nach der Lehre der EP-A 798 299 zugänglichen HDI-AST-PIC mit Alkoholen herstellen. Hierbei können reine Alkohole oder Mischungen verwendet werden.
Geeignete Alkohole für die Blockierungsreaktion sind alle gegebenenfalls substituierten (-O-R¹, -NR¹₂; R¹ = geradkettig oder verzweigtes C₁-C₄-Alkyl), linearen oder verzweigten, oder cycloaliphatischen C₁-C₆-Alkohole. Beispiele erfindungsgemäß geeigneter Alkohole sind Methanol, Ethanol, Methoxyethanol (Ethylenglykohnonoethylether), Dimetyhlaminoethanol, Diethylaminoethanol, Propanol und seine Isomere Methoxypropanol und seine Isomere, Ethoxypropanol und seine Isomere, Dimethylaminopropanol und seine Isomere, Butanol und seine Isomere, Pentanol und seine Isomere und Hexanol und seine Isomere.

Bevorzugte Alkohole sind Methanol, Ethanol, n- und iso-Propanol und Methoxypropanol und seine Isomere.

Dabei ist es belanglos, ob der/die als Blockierungsmittel verwendete/n Alkohol/e im exakt stöchiometrischen Verhältnis, bezogen auf die freien NCO-Gruppen des HDI-AST-PIC eingesetzt wird, oder nicht. Üblicherweise wird ein geringer Alkoholüberschuss eingesetzt. Allerdings wird auch ein gewisser Alkoholunterschuss toleriert, da die freien NCO-Gruppen des PIC in geringem Maße über die reine NCO-OH-Reaktion hinaus mit dem als Blockierungsmittel eingesetztem Alkohol in Nebenreaktionen, z.B: unter Allophanatbildung, abreagieren können. Bevorzugt liegt das NCO-OH-Verhältnis bei der Blockierung zwischen 1,2 und 0,8, besonders bevorzugt zwischen 1,1 und 0,9.

Um die Gebrauchseigenschaften der erfindungsgemäßen Produkte an das jeweilige Anforderungsprofil anzupassen (Steigerung der Vemetzungsdichte durch Erhöhung der mittleren bl. NCO-Funktionalität im fertigen Härter, Beeinflussung der Elastizität durch hart/weich machende Komponenten etc.). kann neben der Blockierungsreaktion eine sogenannte Vorverlängerung erfolgen. Hierfür erfolgt eine Zugabe von unterstöchiometrischen Mengen (bezogen auf die Anzahl der NCO-Gruppen im Basisharz) an Alkoholen, Aminen und/oder Aminoalkoholen zu der, freie Isocyanatgruppen enthaltenden Polyisocyanatkomponente wobei die o.g. Vorverlängerungsmittel mindestens 2 OH- bzw. NH-Gruppen je Molekül enthalten. Hierfür besonders geeignete Verbindungen sind gegebenenfalls verzweigte, gegebenenfalls cyloaliphatische Segmente enthaltende Diole und Triole die bevorzugt (im Mittel) 3 bis 30 C Atome enthalten und deren C-Kette optional mit funktionellen Gruppen, insbesondere Ether- sowie Estergruppen, unterbrochen sein kann. Besonders bevorzugt werden C₃-C₁₂ Di- und Triole eingesetzt wie alle Isomeren sowie beliebige Mischungen nachfolgend aufgeführter Verbindungen untereinander: Propandiole, Butandiole, Pentandiole, Hexandiole, Heptandiole, Octandiole, Nonandiole, Decandiole, Trimethylolethan sowie -propan. Anschliessend oder simultan wird der nicht infolge o.g. "Vorverlängerung" verbrauchte Teil an NCO-Gruppen durch die Zugabe des eigentlichen Blockierungsmittels umgesetzt. Der Anteil der durch die "Vorverlängerung" umgesetzte Anteil an NCO-Gruppen an der Gesamtmenge der NCO-Gruppen des Basisharzes beträgt 1 bis 50 %, bevorzugt 5 bis 20%.

Die Blockierungs- wie auch die Vorverlängerungsreaktion können durch die Verwendung von an sich bekannten und breit in der Polyurethanchemie eingeführten Katalysatoren beschleunigt werden. Hierbei kann auch mehr Katalysator eingesetzt werden, als er zur Beschleunigung der NCO-OHReaktion auf ein technisch vorteilhaftes Niveau - d.h. in der Regel 2 bis 24 Stunden bis zur Abwesenheit freier NCO-Gruppen in der Reaktionsmischung - unbedingt nötig ist, da die Umsetzung der erfindungsgemäßen bl. HDI-AST-PIC mit Polyolkomponenten zur Herstellung von Polyurethan-Kunststoffen- und Beschichtungen in der Regel ebenfalls katalysiert wird.

Beispiele hierfür geeigneter Katalysatoren finden sich in D. A. Wicks und Z. W. Wicks Jr., Progr. Org. Coatings, vol 36, 1999, pp 148 und darin zitierter Literatur. Hierzu zählen Zinnverbindungen vom Typ RₙSnR'₍₄₋ₙ₎ in reiner Form oder als beliebige Mischungen verschiedener, gegebenenfalls auch anteilig Zinn-freier, Spezies untereinander, wobei R, R' und n folgende Bedeutungen haben:
- R: steht für gleiche oder verschiedene, gegebenenfalls verzweigte, Reste aus der reihe C₁-C₁₂-Alkyl, bevorzugt n-Butyl sowie n-Octyl,
- n: steht für 1, 2 oder 3 und
- R': steht für:
→ C₁-C₂₀ Alkanoat, -O-C(O)-R", bevorzugt Acetat, 2-Ethylhexylhexanoat und Laurat,
→ C₁-C₂₀ Thioglykolat, -S-CH₂C(O)-OR"', wobei R" bevorzugt für n-Butyl sowie iso-Ocytl steht.

Die erfindungsgemäßen bl. HDI-AST-PIC können für eine Vielzahl von Anwendungen zum Einsatz kommen. Beispiele hierfür sind die allgemeine Industrielackierung, die Automobilerstlackierung ("OEM") - wobei hier sowohl der Füller- als auch der Klarlackbereich in Frage kommen - die Glasbeschichtung sowie das Coil- und Can-Coating. Bevorzugt werden die erfindungsgemäßen bl. HDI-AST-PIC beim Coil- und Can-Coating eingesetzt. Hierbei profitiert man zusätzlich zur guten Kristallisationsstabilität der erfindungsgemäßen bl. HDI-AST-PIC von den guten Resultaten des T-bend Testes so beschichteter Bleche, der sehr guten Nachreißfestigkeit der im T-bend Test verformten Bleche nach Temperaturbelastung sowie einer sehr guten Überbrennfestigkeit (Details vgl. Anwendungsbeispiele 9 und 10).

Da die erfindungsgemäßen bl. HDI-AST-PIC in reiner, unverdünnter Form sehr hochviskose Produkte darstellen, werden zu ihrer besseren Handhabbarkeit in der Regel Lösungsmittel eingesetzt. Um den Anteil flüchtiger organischer Verbindungen (VOC) so niedrig wie möglich zu halten, ist es allerdings erwünscht, den Lösemittelanteil so gering wie möglich zu wählen, trotzdem aber eine für gute Verarbeitbarkeit nötige niedrige Viskosität einzustellen. Hierbei profitiert man zusätzlich von der generellen Eigenschaft asymmetrischer Diisocyanat-Trimerer, eine signifikant niedrigere Viskosität aufzuweisen, als ihre symmetrischen Isomeren. Der Lösemittelanteil von bl. HDI-AST-PIC kann dadurch, verglichen mit rein Isocyanurat-basierenden Systemen bei gleicher Viskosität sowie NCO-Funktionalität des Härters, verringert werden. Bei gleichem Lösemittelanteil im Lackansatz resultieren niedrigere Viskositäten.

Als Lösemittel kommen dabei alle in der Lackindustrie etablierten Produkte in Frage. Beispiele hierfür sind: Kohlenwasserstoffe (bevorzugt aromatisch), Ester, Ketone, Etherester und Alkohole sowie beliebige Mischungen derselben untereinander.

Die erfindungsgemäßen bl. HDI-AST-PIC können mit allen hierfür üblichen Polyolen ("Bindemitteln") kombiniert werden. Beispiele sind: Polyesterpolyole, Polyacrylatpolyole, Polyurethanpolyole, Epoxidharze, Aminoharze (Melaminharze, Harnstoffharze, Benzoguanaminharze) sowie beliebige Mischungen der vorstehend genannten Bindemittel. Das Verhältnis von Bindemittel zu bl. Härter erfolgt dabei meist so, dass ein bl.-NCO:OH-Verhältnis von 1:1 resultiert. Es kann aber auch über-(bl.-NCO:OH >1) sowie in gewissem Masse untervernetzt (b1.-NCO:OH <1) werden.

Die erfindungsgemäßen bl. HDI-AST-PIC eignen sich zur Beschichtung einer Vielzahl von Materialien, wie Glas, Beton, Metalle etc, bevorzugt werden sie zur Lackierung von Blechen (im sog. "Coil-" und "Can-Coating") eingesetzt.

Anmerkung: Die Abkürzung "bl." steht immer für "blockiert".

### Beispiele

Prozentangaben beziehen sich, so nicht anders angegeben, immer auf die Masse.

Die dynamischen Viskositäten wurden bei 23°C mit dem Viskosimeter VT 550 der Fa. Haake bestimmt. Durch Messungen bei unterschiedlichen Schergeschwindigkeiten wurde sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen. Die Bestimmung der Restmonomergehalte erfolgt gaschromatographisch. Hazen-Farbzahlen werden nach DIN 53 409 bestimmt. Die Ermittlung des NCO-Gehaltes der in den Beispielen und Vergleichsbeispielen beschriebenen, freie NCO-Gruppen enthaltenden Basis-Harze erfolgt durch Titration gemäß DIN 53 185. Die bl.-NCO-Gehalte der in den Beispielen und Vergleichsbeispielen beschriebenen bl.-PIC werden auf der Basis letzterer unter der Annahme berechnet, dass die im Zuge der Blockierungsreaktion umgesetzten NCO-Gruppen bei der Aushärtungsreaktion der bl.-PIC vollständig zur Verfügung stehen. IR-spektroskopische Analysen werden auf einem FT-IR Gerät PE 1750 der Fa. Perkin-Elmer an ca. 0,1 mm starken Schichten der unverdünnten Reaktionsmischungen zwischen NaCl-Fenstern angefertigt. Die Blockierungsreaktion gilt als vollständig, wenn die Intensität der Bande für die ν_{NCO} Schwingung bei ca. 2200 bis 2300 cm⁻¹ nicht mehr vom Rauschpegel unterschieden werden kann. Mol-% Angaben werden ¹³C-NMR-spektroskopisch ermittelt (vgl. Proc. XXIV. Fatipec-Conference, 8.-11. June 1998, Interlaken, Switzerland, vol. D, pp. 131-145). Sie beziehen sich immer auf die Summe der NCO-Trimerstrukturen (Iminooxadiazindion- und Isocyanuratgruppen). Die Messungen erfolgen auf dem Gerät DPX 400 der Fa. Brucker an ca. 50 %igen Proben in trockenem CDCl₃ bei einer Frequenz von 100 MHz. Als Referenz für die ppm-Skale wird die chem. Verschiebung des Lösungsmittels (77,0 ppm) verwendet. Daten für die chemische Verschiebung von Isocyanuraten können der Literatur entnommen (vgl. D. Wendisch, H. Reiff und D. Dieterich, Die Angewandte Makromolekulare Chemie 141, 1986, 173-183 und darin zit. Lit) bzw. durch Vermessung von Modellsubstanzen erhalten werden. Das nach Slotta und Tschesche, Chem. Ber. 1927, 60, 295 zugängliche 3,5-Dimethyl-2-methylimino-4,6-diketo-1,3,5-oxadiazin (AST des Methylisocyanates) weist folgende ¹³C-NMR-chem. Verschiebungen auf (in ppm): 148,3; 144,6 und 137,3 (C=O/C=N-Atome des Iminooxadiazindionringes). Die Iminooxadiazindiongruppen der erfindungsgemäßen bl. HDI-AST-PIC sowie ihrer NCO-Gruppen enthaltenden Basisharze haben sehr ähnliche ¹³C-NMR chem. Verschiebungen der C=O/C=N Atome und sind zweifelsfrei als solche von anderen Isocyanat-Folgeprodukten zu unterscheiden.

### Beispiel 1 (Herstellung von HDI-AST-PIC, "Basisharze")

4000 g (23,8 mol) Hexamethylendiisocyanat (HDI) werden in einer 6-Liter-Vierhalskolben-Rührapparatur mit Rückflußkühler, Dosiervorrichtung für den Katalysator, Innenthermometer und Gaseinleitung zunächst auf 60°C erwärmt und durch einstündiges Rühren bei 20 mbar von gelösten Gasen befreit. Anschließend wird mit Stickstoff belüftet und unter Rühren und Durchleiten eines langsamen Stickstoffstromes durch portionsweise Zugabe einer ca. 50 %igen Lösung von Tetrabutylphosphoniumhydrogendifluorid, n-Bu₄P⁺ [HF₂]⁻, in iso-Propanol/Methanol (ca. 2:1) die anteilig asymmetrische Trimerisierung in Gang gesetzt (Temperaturanstieg um 1-2 K). Der Fortgang der Reaktion wird unter n_{D}-Kontrolle (n_{D}(_{Start}) = n_{D(HDI)} = 1,4523 bei 20°C) verfolgt. Durch gelegentliche Zugabe weiteren Katalysators wird die Reaktion bis zum gewünschten Umsatz, detektiert durch den Brechungsindex der Rohware, n_{D}²⁰)(Stopp), geführt und anschließend durch Zugabe von 0,48 g einer 60 %igen Lösung von p-Toluolsulfonsäure in iso-Propanol je eingesetztem g an o.g. Katalysatorlösung abgestoppt (vgl. Tab. 1).

Die Aufarbeitung der so erhaltenen Rohwaren erfolgt durch Dünnschichtdestillation im Labordünnschichtverdampfer, Typ Kurzwegverdampfer, bei einem Vakuum von ca. 0,2 mbar und einer Temperatur des Heizmediums im Vor- bzw. Hauptverdampfer von 130 bzw. 150°C. Der HDI-Restgehalt der Harze liegt unter 0,15 % bei Hazen-Farbzahlen unterhalb 50 APHA. Nach kurzer Lagerzeit (beschleunigt bei 50°C) wird eine Aufhellung auf bis zu 50 % des unmittelbar nach der Destillation gemessenen Farbniveaus beobachtet.

**Tabelle 1 Angaben zur Herstellung bzw. Daten der HDI-AST-PIC**

| Beispiel | Katalysatorverbrauch¹⁾ | n_{D}²⁰(Stopp) | Harzdaten | |
|---|---|---|---|---|
| | [g] | | Viskosität [mPas]^{23°C} | NCO-Gehalt [%] |
| 1a | 2,4 | 1,4600 | 650 | 23,7 |
| 1b | 2,5 | 1,4660 | 1030 | 23,2 |
| 1c: | 4,8 | 1,4760 | 2500 | 21,8 |

| | | | | |
|---|---|---|---|---|
| ¹⁾ 50 %ige Lösung von n-Bu₄P⁺ [HF₂]⁻ in iso-Propanol/Methanol (ca. 2:1) | | | | |

Der molare Anteil von Iminooxadiazindiongruppen an der Summe aus Isocyanurat- und Iminooxadiazindiongruppen in den gemäß Bsp. 1a - c erhaltenen Harzen beläuft sich auf 40 - 50 mol-%.

### Beispiel 2 (Vergleichsbeispiel)

Zu jeweils einer auf 40°C erwärmten Lösung von
a) 33 mg (0,16 mmol "Sn") Fascat® 4100 (Produkt der Fa. Elf Atochem),
b) 100 mg (0,16 mmol "Sn") Desmorapid® Z (Produkt der Fa. Bayer AG) bzw.
c) 100 mg (0,1 mmol "Sn") Schwedstab OTO 133 (Produkt der Fa. AWL Scandinavia AB)
in jeweils 51,1 g Ethanol (Produkt der Fa. Aldrich, vergällt mit 2 % Toluol, 1,09 mol "OH") werden unter Rühren und gelegentlicher externer Kühlung mit einem Eis-Wasser-Gemisch eine Lösung von jeweils 200 g (1,07 mol "NCO") eines HDI-PIC vom Isocyanurattyp mit einem NCO-Gehalt von 22,9 % und einer Viskosität von 1200 mPas bei 23°C, erhalten gemäß DE-A 38 06 276, Beispiel 11, mit dem Unterschied, dass der zur Herstellung des HDI-PIC verwendete Katalysator nicht in 2-Ethyl-1,3-hexandiol, sondern in 2-Ethylhexanol gelöst zum Einsatz kommt in jeweils 66,7 g Solventnaphtha 100 (Produkt der Fa. Aral) so zugetropft, dass die Innentemperatur der Mischung 45°C nicht überschreitet. Nach vollständiger Zugabe der PIC-Lösung wird unter gelegentlicher, IR-spektroskopischer NCO-Kontrolle bei 40°C weiter gerührt, bis keine NCO-Bande mehr sichtbar ist (maximal 16 Stunden Nachrührzeit).

Die so erhaltenen bl. HDI-PIC (Vergleichsharze) weisen neben 14,4 % berechnetem bl.-NCO-Gehalt unmittelbar nach der Herstellung folgende Daten auf:
a) Viskosität: 2950 mPas/23°C, Farbzahl: 11 Apha
b) Viskosität: 2970 mPas/23°C, Farbzahl: 14 Apha
c) Viskosität: 3020 mPas/23°C, Farbzahl: 17 Apha.
   Nach mehrtägiger Lagerung der in Glasflaschen abgefüllten Mischungen bei Zimmertemperatur (22 ± 2°C) erstarren alle 3 Produkte zu einer weißen, semikristallinen Masse. Erwärmung der Flaschen im Trockenschrank auf 50°C für 12 h liefert keine Verbesserung des Befundes. Die Produkten sind für einen Einsatz als bl.-PIC Härter ungeeignet.
d) Zu 55,2 g Ethanol (Produkt der Fa. Aldrich, vergällt mit 2 % Toluol, 1,17 mol "OH") wird unter Rühren bei 50°C eine Lösung von 200 g (1,04 mol "NCO") eines HDI-PIC vom Isocyanurattyp mit einem NCO-Gehalt von 21,8 % und einer Viskosität von 3500 mPas bei 23°C, erhalten gemäß DE-A 38 06 276, Beispiel 4, in 84,8 g Solventnaphtha 100 (Produkt der Fa. Aral) zügig zugetropft. Nach vollständiger Zugabe der PIC-Lösung wird unter gelegentlicher, IR-spektroskopischer NCO-Kontrolle bei 100°C weiter gerührt, bis keine NCO-Bande mehr sichtbar ist (ca. 6 Stunden Nachrührzeit).

Das so erhaltene bl. HDI-PIC (Vergleichsharz) weist unmittelbar nach der Herstellung einen berechneten bl.-NCO-Gehalt von 12,8 %, eine Viskosität von 1440 mPas/23°C und eine Farbzahl von 20 Apha auf. Nach ca. 20-tägiger Lagerung in einer Glasflasche bei Zimmertemperatur (22 ± 2°C) bilden sich zunehmend gallertartige Gelkörper in der Lösung. Nach weiteren 2 Monaten erstarrt das Produkt teilweise zu einer viskosen, gallertartigen Masse, die auch nach Erwärmung im Trockenschrank auf 50°C (12 h) nicht wieder völlig homogen wird. Das Produkt ist für einen Einsatz als bl.-PIC Härter schlecht geeignet.

### Beispiel 3 (erfindungsgemäß)

Es wird verfahren wie in den Beispielen 2a-c angegeben, mit dem Unterschied, dass die Katalysatorlösung in Ethanol vor Beginn der Zugabe der Harzlösung nur auf 30°C vorgewärmt wird und das als HDI-AST-PIC jeweils 200 g (1,13 mol "NCO") des gemäß Bsp. 1a erhaltenen Produktes verwendet werden. Entsprechend wird die Alkoholmenge angepasst (1,15 mol "OH", 54,11 g mit 2 % Toluol vergälltes EtOH). Die Umsetzung wird unter genauer Temperaturkontrolle bei <40°C durchgeführt. Die Reaktionszeiten sind analog zu den in den Beispielen 2a-c angegebenen.

Die so erhaltenen, erfindungemäßen bl. HDI-PIC weisen neben 14,8 % berechnetem bl.-NCO-Gehalt folgende Daten auf:
a) Viskosität: 2100 mPas/23°C, Farbzahl: 9 Apha
b) Viskosität: 2140 mPas/23°C, Farbzahl: 14 Apha
c) Viskosität: 2180 mPas/23°C, Farbzahl: 13 Apha.

Auch nach 3-monatiger Lagerung bei Zimmertemperatur (22 ± 2°C) bleiben alle 3 Produkte völlig unverändert in Viskosität und Farbzahl.

### Beispiel 4 (erfindungsgemäß)

Es wird verfahren wie in Beispiel 3 angegeben, mit dem Unterschied, dass als HDI-AST-PIC jeweils 200 g (1,1 mol "NCO") des gemäß Bsp. 1b erhaltenen Produktes verwendet werden. Entsprechend wird die Alkoholmenge angepasst (1,12 mol "OH", 52,9 g mit 2 % Toluol vergälltes EtOH).

Die so erhaltenen, erfindungemäßen bl. HDI-PIC weisen neben 14,5 % berechnetem bl.-NCO-Gehalt folgende Daten auf:
a) Viskosität: 2700 mPas/23°C, Farbzahl: 9 Apha
b) Viskosität: 2670 mPas/23°C, Farbzahl: 13 Apha
c) Viskosität: 2580 mPas/23°C, Farbzahl: 11 Apha.

Auch nach 3-monatiger Lagerung bei Zimmertemperatur (22 ± 2°C) bleiben alle 3 Produkte völlig unverändert in Viskosität und Farbzahl.

### Beispiel 5 (erfindungsgemäß)

Es wird verfahren wie in Beispiel 3 angegeben, mit dem Unterschied, dass als HDI-AST-PIC jeweils 200 g (1,04 mol "NCO") des gemäß Bsp. 1c erhaltenen Produktes verwendet werden. Entsprechend wird die Alkoholmenge angepasst (1,06 mol "OH", 49,8 g mit 2 % Toluol vergälltes EtOH).

Die so erhaltenen, erfindungemäßen bl. HDI-PIC weisen neben 13,8 % berechnetem bl.-NCO-Gehalt folgende Daten auf:
a) Viskosität: 3900 mPas/23°C, Farbzahl: 9 Apha
b) Viskosität: 3740 mPas/23°C, Farbzahl: 8 Apha
c) Viskosität: 3820 mPas/23°C, Farbzahl: 9 Apha.

Auch nach 3-monatiger Lagerung bei Zimmertemperatur (22 ± 2°C) bleiben alle 3 Produkte völlig unverändert in Viskosität und Farbzahl.

### Beispiel 6

Zu einer Lösung von 80 mg (0,23 mmol "Sn") Dibutylzinndiacetat (Produkt der Fa. Aldrich) in 150 g 1-Methoxy-2-propanol (Produkt der Fa. Aldrich, 1,66 mol "OH") werden bei Zimmertemperatur unter Rühren und gelegentlicher externer Kühlung mit einem Eis-Wasser-Gemisch eine Lösung von 296 g (1,63 mol "NCO") eines AST-PIC gemäß Bsp. 1b in 108 g Butylacetat (Produkt der Fa. Aldrich) so zugetropft, dass die Innentemperatur 30°C nicht überschreitet. Nach vollständiger Zugabe wird so lange bei 30°C nachgerührt, bis IR-spektroskopisch keine NCO Bande mehr sichtbar ist (ca. 8 Stunden). Das so erhaltene, erfindungemäße bl. HDI-PIC weist einen berechnetem bl.-NCO-Gehalt von 12,4 %, eine Viskosität von 1280 mPas/23°C und eine Farbzahl von 9 Apha auf.

Auch nach 3-monatiger Lagerung bei Zimmertemperatur (22 ± 2°C) bleibt das Produkt völlig unverändert in Viskosität und Farbzahl.

### Beispiel 7

Zu einer Lösung von 36 mg (0,1 mmol "Sn") Dibutylzinndiacetat (Produkt der Fa. Aldrich) in einem Gemisch aus 30 g Ethanol (Produkt der Fa. Aldrich, vergällt mit 2 % Toluol, 0,64 mol "OH") und 10,2 g 2,2,4-Trimethyl-1,3-pentandiol (TMPD, Produkt der Fa. Fluka, 0,14 mol "OH") werden bei Zimmertemperatur unter Rühren und gelegentlicher externer Kühlung mit einem Eis-Wasser-Gemisch eine Lösung von 128 g (0,71 mol "NCO") eines AST-PIC gemäß Bsp. 1b in 42 g Butylacetat (Produkt der Fa. Aldrich) so zugetropft, dass die Innentemperatur 38°C nicht überschreitet. Nach vollständiger Zugabe wird so lange bei 30°C nachgerührt, bis IR-spektroskopisch keine NCO Bande mehr sichtbar ist (ca. 8 Stunden). Das so erhaltene, erfindungemäße bl. HDI-PIC weist einen berechnetem bl.-NCO-Gehalt von 11,6 % (es wird davon ausgegangen, dass nur der mit EtOH blockierte Teil der NCO-Gruppen zur Vernetzung nach Deblockierung zur Verfügung steht), eine Viskosität von 2350 mPas/23°C und eine Farbzahl von 11 Apha auf.

Auch nach 3-monatiger Lagerung bei Zimmertemperatur (22 ± 2°C) bleibt das Produkt völlig unverändert in Viskosität und Farbzahl.

### 8a: Vergleichsbeispiel, 8b erfindungsgemäß

Zu jeweils einer Lösung von 333 mg (0,53 mmol "Sn") Desmorapid® Z (Produkt der Fa. Bayer AG) in jeweils 177 g (2,95 mol "OH") iso-Propanol (Produkt der Fa. Aldrich) wird unter Rühren bei Zimmertemperatur (22 ± 2°C) eine Lösung von
a) 506 g (2,76 mol "NCO") eines HDI-PIC vom Isocyanurattyp mit einem NCO-Gehalt von 22,9 % und einer Viskosität von 1200 mPas bei 23°C, erhalten gemäß DE-A 38 06 276, Beispiel 11, mit dem Unterschied, dass der zur Herstellung des HDI-PIC verwendete Katalysator nicht in 2-Ethyl-1,3-hexandiol, sondern in 2-Ethylhexanol gelöst zum Einsatz kommt bzw.
b) 500 g (2,76 mol "NCO") eines HDI-AST-PIC, erhalten gemäß Beispiel 1b in jeweils 285 g MPA (Produkt der Fa. Aldrich) schnell zugetropft.

Es bildet sich zunächst eine milchige Emulsion. Die Innentemperatur steigt während der Zugabe nur unwesentlich. Anschließend wird 24 h bei 60°C und danach weitere 24 h bei 100°C gerührt, bis IR-spektroskopisch kein NCO mehr nachgewiesen wird.

Während das nach Vergleichsbeispiel 8a erhaltene Produkt nach wenigen Tagen zu einer harten, weißen Masse erstarrt, bleibt das erfindungsgemäß nach Beispiel 8b hergestellte Produkt auch nach 4-monatiger Lagerung bei Zimmertemperatur (22 ± 2°C) homogen, klar und flüssig.

### Beispiel 9: Verwendungsbeispiel

Beschrieben wird die Herstellung von Coil Coating Weißlacken unter Verwendung unterschiedlicher bl.-NCO-Härter; Bspp. 9a und 9b sind Vergleichsbeispiele, Bspp. 9c-9k sind erfindungsgemäß.

Tab. 2 sind Angaben zur Lackherstellung zu entnehmen, die sich mit Ausnahme der jeweiligen Katalysatorkonzentration an die Richtrezeptur RR 6830 der Fa. Bayer AG (Bsp. 9a) anlehnt. Die Weißlacke werden formuliert, indem eine zunächst hergestellte Anreibung der in Tab. 2, Zeilen 3-5, aufgeführten Komponenten mit den bei dem jeweiligen Versuch verwendeten, in Tab. 2 weiter unten aufgeführten Komponenten abgemischt wird. Sämtliche Lacke sind auf etwa gleichen Festkörper eingestellt. Die erfindungsgemäßen Rezepturen Bspp. 9c - 9k weisen dabei eine deutlich niedrigere Viskosität auf, erkennbar an einer kürzeren Auslaufzeit im DIN 4 Becher (kleiner 120 sec), als die Vergleichsrezepturen 9a und 9b (Auslaufzeit DIN 4 Becher um 120 sec).

In Tab. 3 sind die Ergebnisse lacktechnischer Untersuchungen unter Coil Coating Bedingungen an den in Tab. 2 aufgeführten Lacken zusammengestellt. Hierzu wird die jeweilige Lackmischung auf chromatierte, 1 mm dicke Aluminiumbleche aufgerakelt (Trockenschichtdicke vgl. Tab. 3). Sofort nach dem Lackauftrag werden die Bleche im Aalborgofen auf dem Drehteller eingebrannt. Bzgl. "peak metal temperature" (PMT, Objekttemperatur) etc. vgl. Tab. 3. Wie man sieht, haben die erfindungsgemäßen Produkte neben dem generellen Vorteil der Kristallisationsstabilität einen weiteren Vorteil im applizierten Lackfilm aufgrund der geringeren Thermovergilbung. Dies zeigt sich insbesondere dann, wenn der Lackfilm bei einer PMT oberhalb 254°C überbrannt wird.

### Beispiel 10: Verwendungsbeispiel

Beschrieben wird die Herstellung von Coil Coating Weißlacken unter Verwendung verschiedener bl.-NCO-Härter unter Zugrundelegung der Rezeptur aus Bsp. 9a, mit dem Unterschied, dass Art und Menge des für die Aushärtung verwendeten Katalysators variiert werden und bei unterschiedlichen Temperaturen eingebrannt wird. Bspp. 10a, b, d, f und h sind Vergleichsbeispiele, Bspp. 10c, e, g und i sind erfindungsgemäß.

Wie man den in Tab. 4 aufgeführten Ergebnissen entnehmen kann, sind bei der Verwendung Alkohol-b1.-PIC höhere Katalysatorkonzentrationen nötig, als sie bei der alleinigen Verwendung von mit Desmodur^{®} BL 3175, einem mit Butanonoxim blockierten HDI-Trimeren vom Isocyanurattyp der Fa. Bayer AG, resultieren. Vorteile ergeben sich bei der Verwendung der erfindungsgemäßen bl. HDI-AST-PIC gegenüber den mit Alkoholen bl. HDI-PIC vom Isocyanurattyp wie auch gegenüber dem o.g. Butanoxim-bl. System insbesondere durch die wesentlich bessere Überbrennfestigkeit sowie die etwas höhere Reaktivität, erkennbar an der auch gegenüber 100 Doppelhüben mit Methylethylketon völlig stabilen Oberfläche im Vergleich zu leichten Anlösungserscheinungen bei den unter analogen Bedingungen ausgehärteten Vergleichsprodukten (matte Oberfläche).

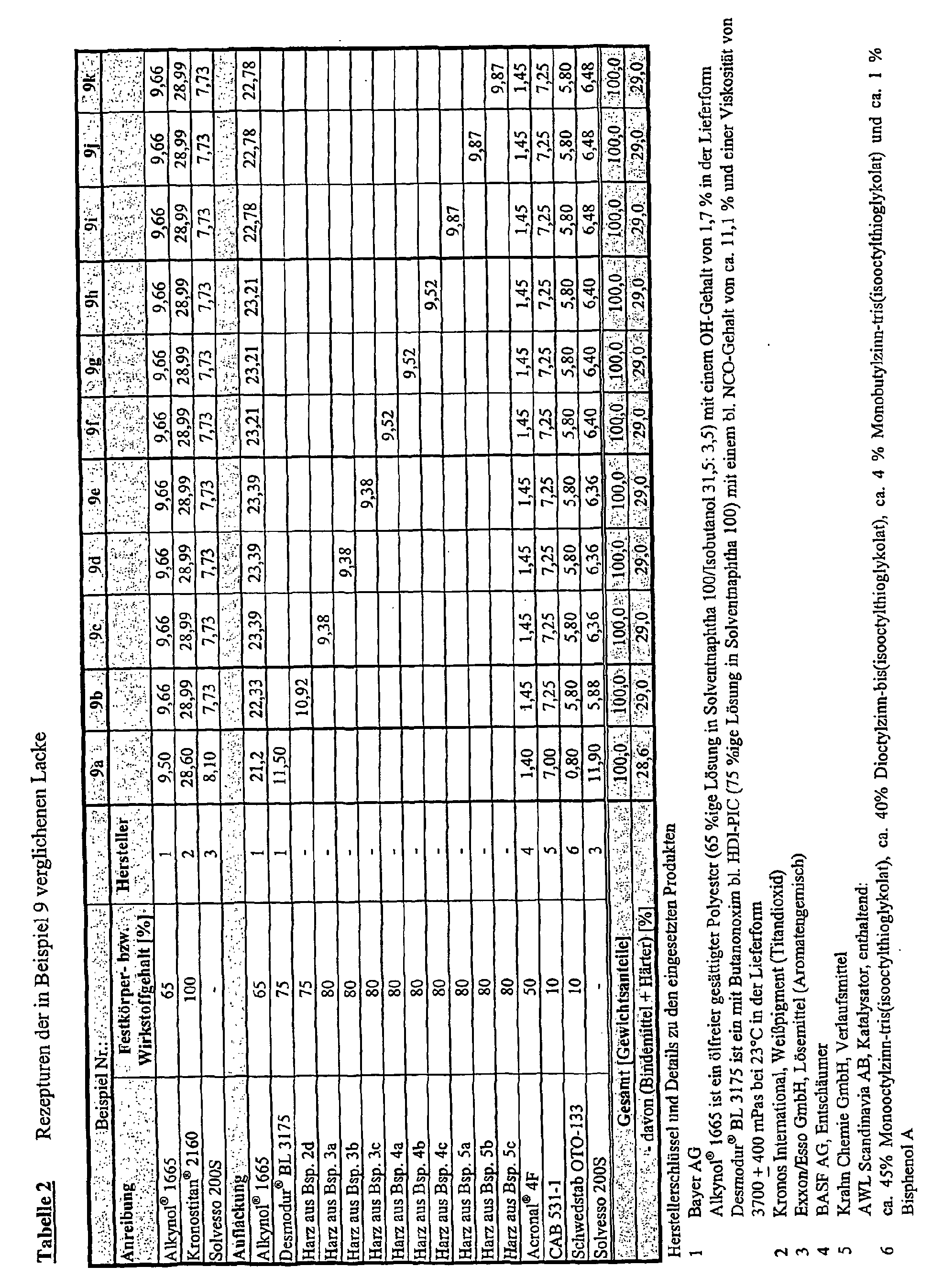

**Tabelle 3 Resultate der Prüfungen unter Coil Coating Bedingungen**

| **Beispiel Nr:** | | **9a** | **9b** | **9c** | **9d** | **9e** | **9f** | **9g** | **9h** | **9i** | **9j** | **9k** |
|---|---|---|---|---|---|---|---|---|---|---|---|---|
| **PMT** | | 232°C | 232°C | 232°C | 232°C | 232°C | 232°C | 232°C | 232°C | 232°C | 232°C | 232°C |
| **Schichtdicke µm** | (ECCA-TI)* | 20-21 | 20-22 | 20-21 | 20-22 | 20-21 | 20-22 | 20-22 | 20-22 | 20-22 | 20-21 | 20-22 |
| **Glanz** n.**Gardner** 20°/60° | (ECCA-T2)* | 63/86 | 74/88 | 63/86 | 74/88 | 73/85 | 73/85 | 73/85 | 73/85 | 73/85 | 73/85 | 73/85 |
| **Weißwert** n.Berger | PMT 232°C | 93,7 | 95,7 | 96,7 | 96,0 | 96,1 | 96,7 | 96,6 | 96,5 | 96,2 | 96,8 | 96,8 |
| **Gelbwert** | PMT 232°C | -4,1 | -3,9 | -4,0 | -3,9 | -3,9 | -4,0 | -4,1 | -4,1 | -4,1 | -4,1 | -4,2 |
| **Weißwert** n.Berger | PMT 254°C | 93,4 | 95,2 | 94,7 | 94,8 | 94,9 | 95,4 | 94,5 | 94,9 | 94,5 | 95,4 | 94,5 |
| **Gelbwert** | PMT 254°C | -4,0 | -4,0 | -3,6 | -2,9 | -3,6 | -3,7 | -3,4 | -3,6 | -3,2 | -3,8 | -2,7 |
| **MEK-Wischtest** Dh. 2kg | PMT 232°C | 100 | 100W | 100W | 100W | 100W | 100W | 100W | 100W | 100W | 100W | 100W |
| | PMT 224°C | 100W | 10 | 10 | 10 | 10 | 10 | 10 | 10 | 10 | 10 | 10 |
| | PMT 216°C | 100MW | <5 | <5 | <5 | <5. | <5 | <5 | <5 | <5 | <5 | <5 |
| **Microhärte** 30s 10g/30s | | 3,9/3,0 | 7,5/6,3 | 7,8/6,9 | 6,9/6,1 | 7,7/7,2 | 8,5/7,6 | 7,2/6,5 | 7,4/6,8 | 6,5/6,0 | 7,5/6,5 | 6,4/5,3 |
| **Schlagprüfung inch/lbs** | (ECCA-T5)* | 80 | 80 | 80 | 80 | 80 | 80 | 80 | 80 | 80 | 80 | 80 |
| **Haftung 6mm im** # | (ECCA-T6)* | 0 | 0 | 0 | 0 | 0 | 0 | 0 | 0 | 0 | 0 | 0 |
| **T-bend** -**Test Haftung** o.B. | (ECCA-T7)* | 1,0T | 1,0T | 0,5T | 0,5T | 0,5T | 1,0T | 0T | 0T | 0,5T | 0T | 0T |
| **T-bend-Test Elastizität o.B.** | (ECCA-T7)* | 1,0T | 0,5T | 0,5T | 0,5T | 0,5T | 1,0T | 0,5T | 0T | 0,5T | 0,5T | 0,5T |
| **T-bend-Test Nachreißfestigkeit** | 30'100°C | 1,5T o.k. | 1,5T o.k. | 1,5T o.k. | 1,5T o.k. | 1,5T o.k. | 1,0T o.k. | 1,5T o.k. | 1,0T o.k. | 1,5T o.k. | 1,5T o.k. | 1,5T o.k. |

| | | | | | | | | | | | | |
|---|---|---|---|---|---|---|---|---|---|---|---|---|
| Rezepturen vgl. Tab. 2 MEK-Wischtest: ECCA-Test Methode T 11, MEK = Methylethylketon (Butanon, Fa. Shell/Exxon), M=matt ; W=weich *=in Anlehnung an ECCA-Test Methoden. Substrat: Aluminium 1mm, vorbehandelt mit Bonder 722 | | | | | | | | | | | | |

**Tabelle 4 Ergebnisse der Untersuchungen zur Überbrennfestigkeit sowie zur Reaktivität bei Einsatz verschiedener Vernetzungskatalysatoren**

| **Beispiel** | 10a | 10b | **10c** | 10d | **10e** | 10f | **10g** | 10h | **10i** |
|---|---|---|---|---|---|---|---|---|---|
| **bl. NCO Härter** | Desmodur^{®} BL3175 | aus Bsp. 2d | **aus Bsp. 4c** | aus Bsp. 2d | **aus Bsp. 4c** | aus Bsp. 2d | **aus Bsp. 4c** | aus Bsp. 2d | **aus Bsp_{.} 4c** |
| **Katalysator¹⁾** | 0,3% | 2,0% | **2,0%** | 1,0% | **1,0%** | 2,0% | **2,0%** | 3,0% | **3,0%** |

| **Überbrennfestigkeit** | | | | | | | | | |
|---|---|---|---|---|---|---|---|---|---|
| **Weißgrad PMT** 232°C | 93,8 | 93,3 | **95,2** | 93,6 | **95,3** | 92,7 | **94,0** | 93,6 | **93,9** |
| **Weißgrad PMT ≥254°C** | 91,3 | 91,8 | **94,3** | 93,2 | **93,8** | 92,4 | **93,6** | 90,2 | **92,8** |

| **Reaktivität** | | | | | | | | | |
|---|---|---|---|---|---|---|---|---|---|
| PMT 210°C | | | | | | | | | |
| **MEK-Wischtest** Dh.2kg | 100MW | | | | | 100W | **100W** | 100W | **100W** |

| PMT 216°C | | | | | | | | | |
|---|---|---|---|---|---|---|---|---|---|
| **MEK-Wischtest** Dh.2kg | 100W | 5 | | 10 | | 100W | **100W** | 100W | **100W** |

| PMT 224°C | | | | | | | | | |
|---|---|---|---|---|---|---|---|---|---|
| **MEK-Wischtest** Dh. 2kg | 100 | 100MW | **30** | 100W | **25** | 100W | **100** | 100W | **100W** |

| PMT 232°C | | | | | | | | | |
|---|---|---|---|---|---|---|---|---|---|
| **MEK-Wischtest** Dh.2kg | 100 | 100MW | **100** | 100W | **100** | 100 | **100** | 100W | **100** |

| | | | | | | | | | |
|---|---|---|---|---|---|---|---|---|---|
| ¹⁾ die Katalysatormenge bezieht sich immer auf die Summe aus Festkörper im Bindemittel und im bl. PIC-Härter DBTL = Dibutylzinndilaurat (Desmorapid^{®} Z, Fa. Bayer), DBZDA = Dibutylzinndiacetat (Fa. Aldrich) als Bindemittel wird immer Alkynol^{®} 1665 im bl. NCO : OH-Verhältnis 1:1 eingesetzt MEK-Wischtest: ECCA-Test Methode T 11, MEK = Methylethylketon (Butanon, Fa. Shell/Exxon), M=matt ; W=weich Untergrund: Aluminium 1mm; Bonder 722 | | | | | | | | | |

## Patentansprüche

1. Mit Alkoholen blockierte Polyisocyanate auf HDI-Basis, erhältlich durch Umsetzung von Iminooxadiazindiongruppen enthaltenden HDI-PIC Basisharzen bei denen sich der molare Anteil an Iminooxadiazindiongruppen an der Summe aus Iminooxadiazindion- und Isocyanuratgruppen auf mindestens 20 Mol-% beläuft, mit Alkoholen der Formel (I)
ROH (I),
worin
R für aliphatische, geradkettige oder verzweigte, gegebenenfalls cyclische, gegebenenfalls substituierte (O-R¹, NR¹₂), C₁-C₆-Reste steht und
R¹ für geradkettig oder verzweigtes Alkyl steht.

2. B1. HDI-AST-PIC gemäß Anspruch 1, **dadurch gekennzeichnet, dass** R für aliphatische, geradkettige oder verzweigte, gegebenenfalls substituierte (O-R¹, NR¹₂), C₁-C₄-Reste steht wobei R¹ für aliphatische, geradkettige oder verzweigte C₁ bis C₄ Reste stehen kann.

3. B1. HDI-AST-PIC gemäß Anspruch 1, **dadurch gekennzeichnet, dass** ROH für Methanol, Ethanol, n- oder iso-Propanol bzw. ein beliebiges Isomer des Methoxypropanols steht.

4. B1. HDI-AST-PIC gemäß Ansprüchen 1 bis 3, **dadurch gekennzeichnet, dass** sich im zur Blockierung verwendeten, Iminooxadiazindiongruppen (asymmetrische NCO-Trimere, AST) enthaltenden HDI-PIC-Basisharz der molare Anteil an Iminooxadiazindiongruppen an der Summe aus Iminooxadiazindion- und Isocyanuratgruppen auf mindestens 30 % beläuft.

5. Verfahren zur Herstellung der mit Alkoholen blockierten Polyisocyanate auf HDI-Basis, **dadurch gekennzeichnet, dass** Iminooxadiazindiongruppen enthaltende HDI-PIC Basisharze, bei denen der molare Anteil an Iminooxadiazindiongruppen an der Summe aus Iminooxadiazindion- und Isocyanuratgruppen mindestens 20 Gew.-% beträgt, mit Alkoholen der Formel (I)
ROH (I),
in welcher
R für aliphatische, geradkettige oder verzweigte, gegebenenfalls cyclische, gegebenenfalls substituierte (O-R¹, NR¹₂), C₁-C₆-Reste steht und
R¹ für geradkettig oder verzweigtes Alkyl steht,
umgesetzt werden.

6. Verwendung der mit Alkoholen blockierten Polyisocyanate auf HDI-Basis nach Ansprüchen 1 bis 4 zur Herstellung von Polyurethan-Kunststoffen und -Beschichtungen.

7. Verwendung der mit Alkoholen blockierten Polyisocyanate auf HDI-Basis nach Ansprüchen 1 bis 4 zur Beschichtung von metallischen Substraten.

8. Verwendung der mit Alkoholen blockierten Polyisocyanate auf HDI-Basis nach Ansprüchen 1 bis 4 im Coil- und Can-Coating-Verfahren.

## Claims

1. Polyisocyanates which are based on HDI, are blocked with alcohols and are obtainable by reaction of HDI-PIC base resins which contain iminooxadiazinedione groups and in which the molar content of iminooxadiazinedione groups of the total of iminooxadiazinedione and isocyanurate groups is at least 20 mol% with alcohols of the formula (I)
ROH (I),
wherein
R represents aliphatic, straight-chain or branched, optionally cyclic, optionally substituted (O-R¹, NR¹₂), C₁-C₆ radicals and
R¹ represents straight-chain or branched alkyl.

2. Bl. HDI-AST-PIC according to claim 1, **characterized in that** R represents aliphatic, straight-chain or branched, optionally substituted (O-R¹, NR¹₂), C₁-C₄ radicals, wherein R¹ can represent aliphatic, straight-chain or branched C₁ to C₄ radicals.

3. Bl. HDI-AST-PIC according to claim 1, **characterized in that** ROH represents methanol, ethanol, n- or iso-propanol or any desired isomer of methoxypropanol.

4. Bl. HDI-AST-PIC according to claims 1 to 3, **characterized in that** in the HDI-PIC base resin which contains iminooxadiazinedione groups (asymmetric NCO trimers, AST) used for the blocking, the molar content of iminooxadiazinedione groups of the total of iminooxadiazinedione and isocyanurate groups is at least 30%.

5. Process for the preparation of the polyisocyanates based on HDI which are blocked with alcohols, **characterized in that** HDI-PIC base resins which contain iminooxadiazinedione groups and in which the molar content of iminooxadiazinedione groups of the total of iminooxadiazinedione and isocyanurate groups is at least 20 wt.% are reacted with alcohols of the formula (I)
ROH (I),
in which
R represents aliphatic, straight-chain or branched, optionally cyclic, optionally substituted (O-R¹, NR¹₂), C₁-C₆ radicals and
R¹ represents straight-chain or branched alkyl.

6. Use of the polyisocyanates based on HDI which are blocked with alcohols, according to claims 1 to 4, for the preparation of polyurethane plastics and coatings.

7. Use of the polyisocyanates based on HDI which are blocked with alcohols, according to claims 1 to 4, for coating metallic substrates.

8. Use of the polyisocyanates based on HDI which are blocked with alcohols, according to claims 1 to 4, in the coil and can coating process.

## Revendications

1. Polyisocyanates bloqués avec des alcools à base de HDI obtenus par réaction de résines à base d'HDI-PIC contenant des groupes imminooxadiazinediones, pour lesquelles la part molaire des groupes iminooxadiazinediones par rapport à la somme des groupes iminooxadiazinediones et isocyanurates est d'au moins 20 % en mole avec des alcools de la formule (I)
ROH (I),
dans laquelle
R représente des restes C₁-C₆ aliphatiques, linéaires ou ramifiés, éventuellement cycliques, éventuellement substitués (O-R¹, NR¹₂) et
R¹ représente un groupe alkyle linéaire ou ramifié.

2. HDI-AST-PIC bloqué selon la revendication 1, **caractérisé en ce que** R représente des restes en C₁-C₄ aliphatiques, linéaires ou ramifiés, éventuellement substitués (O-R¹, NR¹₂), dans lesquels R¹ peut représenter des restes C₁ à C₄ aliphatiques, linéaires ou ramifiés.

3. HDI-AST-PIC bloqué selon la revendication 1, **caractérisé en ce que** ROH représente le méthanol, l'éthanol, le n- ou iso-propanol respectivement un isomère quelconque du méthoxypropanol.

4. HDI-AST-PIC bloqué selon les revendications 1 à 3, **caractérisé en ce que** pour le blocage des résines à base d'HDI-PIC utilisées, contenant des groupes iminooxadiazinediones (trimères NCO asymétriques, AST) la part molaire des groupes iminooxadiazinediones par rapport à la somme des groupes iminooxadiazinediones et isocyanurates est d'au moins 30 %.

5. Procédé pour la préparation des polyisocyanates bloqués avec des alcools à base d'HDI, **caractérisé en ce que** des résines à base d'HDI-PIC contenant des groupes iminooxadiazinediones, pour lesquelles la part molaire des groupes iminooxadiazinediones par rapport à la somme des groupes iminooxadiazinediones et isocyanurates est d'au moins 20 % en poids, réagissent avec des alcools de la formule (I)
ROH (I),
dans laquelle
R représente des restes en C₁-C₆ aliphatiques, linéaires ou ramifiés, éventuellement cycliques, éventuellement substitués (O-R¹, NR¹₂) et
R¹ représente un groupe alkyle linéaire ou ramifié.

6. Utilisation des polyisocyanates bloqués avec des alcools à base d'HDI selon les revendications 1 à 4 pour la préparation de matières plastiques et de revêtements de polyuréthanes.

7. Utilisation des polyisocyanates bloqués avec des alcools à base d'HDI selon les revendications 1 à 4 pour le revêtement de substrats métalliques.

8. Utilisation des polyisocyanates bloqués avec des alcools à base d'HDI selon les revendications 1 à 4 dans un procédé Coil- et Can-Coating.
